# EUROPÄISCHE PATENTSCHRIFT

(11) **EP 2 358 792 B1**
(45) Veröffentlichungstag und Bekanntmachung des Hinweises auf die Patenterteilung: **07.11.2012**
(21) Anmeldenummer: 09765110.3
(22) Anmeldetag: 08.12.2009
(51) Int. Cl.: C08G 77/26, C08G 77/452

(54) **VERFAHREN ZUR HERSTELLUNG VON AMINOGRUPPEN AUFWEISENDEN ORGANOSILICIUMVERBINDUNGEN**
METHOD FOR PRODUCING ORGANOSILICON COMPOUNDS HAVING AMINO GROUPS
PROCÉDÉ DE PRODUCTION DE COMPOSÉS ORGANOSILICIUM PRÉSENTANT DES GROUPES AMINO

(30) Priorität: 19.12.2008 DE 102008055039
(43) Veröffentlichungstag der Anmeldung: 24.08.2011
(73) Patentinhaber: Wacker Chemie AG, 81737 München (DE)
(72) Erfinder: SELBERTINGER, Ernst, 84489 Burghausen (DE); PFEIFFER, Jürgen, 84561 Mehring (DE)
(74) Vertreter: Budczinski, Angelika
(86) Internationale Anmeldenummer: PCT/EP2009/066618
(87) Internationale Veröffentlichungsnummer: WO 2010/069820

(56) Entgegenhaltungen:
- EP-B1- 1 406 950
- EP-B1- 1 412 416
- US-A- 5 461 134

## Beschreibung

Die Erfindung betrifft ein Verfahren zur Herstellung von Aminogruppen aufweisenden Organosiliciumverbindungen, die keinen oder einen sehr geringen Anteil an Silanol-Gruppen aufweisen.

Verfahren zur Herstellung von Aminogruppen aufweisenden Organosiliciumverbindungen sind bereits bekannt. In US-A 5,461,134 wird ein Äquilibrierverfahren zur Herstellung von Aminoalkyl-endständigen Siloxanen mit Kettenlängen von mehr als 50 Siliciumatomen beschrieben. Als Katalysator dient wasserfreies Tetramethylammoniumhydroxid-Aminopropyldimethyl-Silanolat. Des Weiteren beschreibt EP-A 739 372 ein Äquilibrierverfahren zur Herstellung von Aminoalkyl-endständigen Siloxanen mit Kettenlängen von mehr als 27 Siliciumatomen. Als Katalysator dienen Rb- oder Cs-Hydroxide/Silanolate, die nach Beendigung der Reaktion mit Säuren neutralisiert und die Salze abfiltriert werden müssen. Die bisher bekannten Verfahren haben häufig den Nachteil, dass aufgrund des Einbaus der vorhandenen Feuchtespuren Verbindungen mit einem hohen Silanolanteil erhalten werden. Eine Reduzierung des unerwünschten Silanolanteils ist meist mit einem deutlich erhöhten Verfahrensaufwand verbunden.

EP 1 406 950 B1 offenbart ein Aminosiloxan hergestellt aus (i) ein Hydroxysiloxan und (ii) ein Silazan. Dieses Aminoorganopolysiloxan-Zwischenprodukt wird weiter mit einem Isocyanatosilan umgesetzt.

Für viele Anwendungen der aminofunktionellen Siloxane, wie z.B. Copolymerisation mit Diisocyanaten, Säureestern und Säurechloriden, ist ein niedriger Silanolanteil enorm wichtig. Als besonders nachteilig haben sich Si-OH-Gruppen bei Copolymerisationen zu Polyharnstoffen erwiesen, da die Si-OH-Gruppen in der nachfolgenden Polyadditionsreaktion mit Diisocyanaten als Kettenstopper fungieren. Diese Problematik wird mit wachsender

Kettenlänge des Polysiloxans immer bedeutsamer, weil die Zahl der aktiven Endgruppen bei wachsender Siloxankettenlänge sinkt.

Gegenstand der Erfindung ist ein Verfahren zur Herstellung von Aminogruppen aufweisenden Organopolysiloxanen, dadurch gekennzeichnet, dass
(A) Aminogruppen und Si-gebundene Hydroxylgruppen aufweisende Organosiliciumverbindungen, erhältlich durch Äquilibrierung von im Wesentlichen linearen, endständige SiC-gebundene Aminogruppen aufweisenden Organopolysiloxanen mit im Wesentlichen linearen, endständige Si-gebundene Hydroxylgruppen aufweisenden Organopolysiloxanen und/oder Cyclosiloxanen in Anwesenheit von Äquilibrierungskatalysatoren,
   mit
(B) Silazanen der Formel (IV) 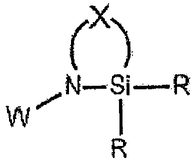 umgesetzt werden, wobei
   W Wasserstoffatom, einwertigen gegebenenfalls substituierten Kohlenwasserstoffrest oder Organosilylrest bedeutet,
   R gleich oder verschieden sein kann und einwertigen, gegebenenfalls substituierten Kohlenwasserstoffrest oder Organyloxyrest bedeutet und
   X einen zweiwertigen, gegebenenfalls substituierten Kohlenwasserstoffrest bedeutet, der durch Sauerstoff- oder Stickstoffatome unterbrochen sein kann.

Im Rahmen der vorliegenden Erfindung sollen von dem Begriff Organopolysiloxane sowohl polymere, oligomere wie auch dimere Siloxane mitumfasst werden, bei denen ein Teil der Siliciumatome durch andere Gruppen als Sauerstoff, wie etwa über -N- oder -C-, miteinander verbunden sein können.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Kohlenwasserstoffreste R sind Halogenalkylreste, wie der 3,3,3-Trifluor-n-propylrest, der 2,2,2,2',2',2'-Hexafluor- isopropylrest, der Heptafluorisopropylrest und Halogenarylreste, wie der o-, m- und p-Chlorphenylrest, Alkylreste mit Ethersauerstoffen wie z.B. Alkoxyalkylreste wie der 2-Methoxyethylrest.

Beispiele für Organyloxyreste R sind Alkoxyreste, wie der Methoxy-, Ethoxy-, n-Propoxy-, iso-Propoxy-, 1-n-Butoxy-, 2-n-Butoxy- und der iso-Butoxy-Rest.

Bevorzugt handelt es sich bei Rest R Kohlenwasserstoffreste mit 1 bis 20 Kohlenstoffatomen, besonders bevorzugt um den Methyl- oder den Phenylrest.

Beispiele für zweiwertige Reste X sind lineare oder verzweigte Alkylenreste, wie der Methylen-, Ethylen-, n-Propylen-, isoPropylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste und Octadecylenreste; Cycloalkylenreste, wie Cyclopentylenrest, Alkenylenreste, wie der Vinylen-, n-Hexenylen-, Cyclohexenylen-, 1-Propenylen-, Allylen-, Butenylen- und 4-Pentenylenrest; Alkinylenreste, wie der Ethinylen- und Propargylenrest; Arylenreste, wie der Phenylen-, Naphthylen-, Anthrylen- und Phenanthrylenrest; Alkarylenreste, wie o-, m-, p-Tolylenreste, Xylylenreste und Ethylphenylenreste; und Aralkylenreste, wie der Benzylenrest, der α- und der β-Phenylethylenrest.

Beispiele für substituierte Reste X sind die vorgenannten Reste, in denen nicht benachbarte Methyleneinheiten mit Gruppen -O- oder =N-R' ersetzt sind, wobei R' eine für R oben genannte Bedeutung hat, wie z.B. -CH₂-CH₂-O-CH₂-, -CH₂-CH₂-NR'-CH₂-, sowie zweiwertige mit Halogenatomen substituierte Kohlenwasserstoffreste, wie z.B. -CH₂-CH₂-CHCl-CH₂-.

Bevorzugt handelt es sich beim Rest X um zweiwertige aliphatische Reste mit 1 bis 10 Kohlenstoffatomen, wobei der 1,3-Propylenrest und der 2-Methyl-1,3-Propylenrest besonders bevorzugt sind.

Falls Rest W die Bedeutung von Organosilylrest hat, handelt es sich bevorzugt um Reste der Formel

-SiR⁴₂-Z-NR⁵₂ (V),

wobei
R⁴ gleich oder verschieden sein kann und eine für R angegebene Bedeutung hat,
R⁵ gleich oder verschieden sein kann und Wasserstoffatom oder einwertigen, gegebenenfalls substituierten Kohlenwasserstoffrest bedeutet und
Z einen zweiwertigen, gegebenenfalls substituierten Kohlenwasserstoffrest bedeutet, der durch Sauerstoff- oder Stickstoffatome unterbrochen sein kann

Beispiele für Rest R⁴ sind die für R angegebenen Beispiele.

Bevorzugt handelt es sich bei Rest R⁴ um Alkyl-, Alkenyl- oder Arylreste, besonders bevorzugt um Alkylreste, insbesondere um den Methylrest.

Beispiele für Rest R⁵ sind die für R angegebenen Beispiele für gegebenenfalls substituierte Kohlenwasserstoffreste.

Bevorzugt handelt es sich bei Rest R⁵ um Wasserstoffatom, Alkyl- oder Arylreste, wobei Wasserstoffatome besonders bevorzugtist.

Beispiele für Z sind die oben für X angegebenen Beispiele.

Bevorzugt handelt es sich bei Rest Z um lineare oder verzweigte Alkylreste, wobei der 1,3-n-Propylenrest besonders bevorzugt ist.

Beispiele für W gleich Organosilylrest sind 3-Aminopropyl-dimethylsilyl-, N-Methyl-3-aminopropyl-dimethylsilyl-, N-Methyl-3-amino-2-methyl-propyl-dimethylsilyl- oder auch der 4-Aminobutyl-dimethylsilyl-Rest, wobei der 3-Aminopropyl-dimethyl-silyl-Rest bevorzugt ist.

Beispiele für W gleich einwertigem, gegebenenfalls substituierten Kohlenwasserstoffrest sind die für Rest R obengenannten Kohlenwasserstoffreste sowie Aminoalkylreste, wie der 2-Aminoethyl- der 3-Aminopropyl- und der 4-Aminobutylrest.

Bevorzugt handelt es sich bei Rest W um Reste der Formel (V), besonders bevorzugt um den 3-Aminopropyl-dimethyl-silyl-Rest.

Beispiele für erfindungsgemäß eingesetzte Silazane (B) sind solche der Formel (IV) mit X gleich 2-Methyl-1,3-Propylenrest und W gleich Wasserstoffatom oder Methylrest (Formel IVa) 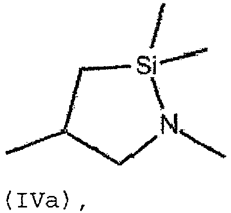 solche der Formel (IV) mit X = 1,3-Propylenrest und W = H, 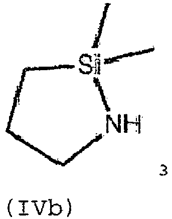 oder solche der Formel (IV) mit W gleich SiR⁴₂-Z-NR⁵₂-Rest (Formel IVc) 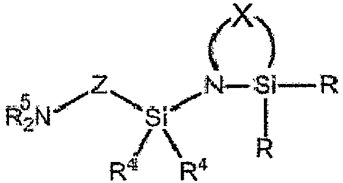 mit R, R⁴, R⁵, X und Z gleich einer der obengenannten Bedeutungen, wie beispielsweise 3-[(2,2-Dimethyl-1,2-azasilolidin-1-yl)(dimethyl)silyl]-1-propanamin.

Bevorzugt handelt es sich bei den erfindungsgemäß eingesetzten Silazanen (B) um solche der Formel (IV) mit W gleich Organosilylrest, besonders bevorzugt um Silazane der Formel (IVc), insbesondere um 3-[(2,2-Dimethyl-1,2-azasilolidin-1-yl)(dimethyl)-silyl]-1-propanamin.

Bei den im erfindungsgemäßen Verfahren eingesetzten Aminogruppen und Si-gebundene Hydroxylgruppen aufweisenden Siloxanen (A) kann es sich um beliebige, bisher bekannte Siloxane handeln, die in der Regel durch Äquilibrierung hergestellt werden. Bevorzugt handelt es sich bei diesen Siloxanen um weitgehend lineare, endständige SiC-gebundene Aminogruppen aufweisende Organopolysiloxane mit einem Silanol-Gehalt von 50 bis 100000 Gew.-ppm, bevorzugt 50 bis 50000 Gew.-ppm.

Die im erfindungsgemäßen Verfahren eingesetzten Aminogruppen und Si-gebundene Hydroxylgruppen aufweisenden Siloxane (A) haben eine Viskosität von bevorzugt 4 bis 1 000 000 mm²/s, besonders bevorzugt 4 bis 200 mm²/s, jeweils bei 25°C.

Bevorzugt handelt es sich bei dem erfindungsgemäßen Verfahren um ein zweistufiges Verfahren, dadurch gekennzeichnet, dass in einer 1. Stufe
(a1) im Wesentlichen lineare, endständige SiC-gebundene Aminogruppen aufweisende Organopolysiloxane
   mit
(a2) im Wesentlichen linearen, endständige Si-gebundene Hydroxylgruppen aufweisenden Organopolysiloxanen
   und/oder Cyclosiloxanen
   in Anwesenheit von Äquilibrierungskatalysatoren umgesetzt werden und
   in einer 2. Stufe
   die so erhaltenen Aminogruppen und Si-gebundene Hydroxylgruppen aufweisenden Organopolysiloxane (A) mit
(B) Silazanen der Formel (IV) 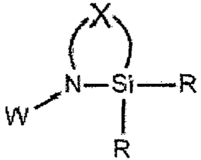 umgesetzt werden, wobei
   W Wasserstoffatom, einwertigen gegebenenfalls substituierten Kohlenwasserstoffrest oder Organosilylrest bedeutet,
   R gleich oder verschieden sein kann und einwertigen, gegebenenfalls substituierten Kohlenwasserstoffrest oder Organyloxyrest bedeutet und
   X einen zweiwertigen, gegebenenfalls substituierten Kohlenwasserstoffrest bedeutet, der durch Sauerstoff- oder Stickstoffatome unterbrochen sein kann.

Bevorzugt handelt es sich bei den im Wesentlichen linearen, endständige Aminogruppen aufweisenden Organopolysiloxanen (a1) um Siloxane der Formel

R⁶HN-Y- [SiR¹₂O]ₙSiR¹₂-Y-NHR⁶ (I),

wobei
R¹ gleich oder verschieden sein kann und einen einwertigen, gegebenenfalls substituierten Kohlenwasserstoffrest bedeutet,
R⁶ gleich oder verschieden sein kann und Wasserstoffatom oder einwertigen, gegebenenfalls substituierten Kohlenwasserstoffrest bedeutet,
Y gleich oder verschieden sein kann und einen zweiwertigen, gegebenenfalls substituierten Kohlenwasserstoffrest bedeutet und n eine ganze Zahl von größer oder gleich 1, bevorzugt 1 bis 50, ist.

Beispiele für Rest R¹ und R⁶ sind unabhängig voneinander die oben für R angegebenen Beispiele für gegebenenfalls substituierte Kohlenwasserstoffreste.

Bevorzugt handelt es sich bei Rest R¹ um Kohlenwasserstoffreste mit 1 bis 20 Kohlenstoffatomen, besonders bevorzugt um den Methyl- oder den Phenylrest.

Bevorzugt handelt es sich bei Rest R⁶ um Wasserstoffatom und Kohlenwasserstoffreste mit 1 bis 20 Kohlenstoffatomen, besonders bevorzugt um Wasserstoffatom oder Methyl.

Beispiele für Rest Y sind die oben für X angegebenen Beispiele.

Bevorzugt handelt es sich bei Y um Alkylenreste und den Phenylenrest, besonders bevorzugt um den Methylen-, Propylen- oder Phenylenrest.

Obwohl in Formel (I) nicht angegeben, können bis zu 5 Molprozent der Diorganosiloxaneinheiten durch andere Siloxaneinheiten, wie z.B. R¹SiO_{3/2}- und SiO_{4/2}-Einheiten, ersetzt sein, wobei R¹ die vorstehend dafür angegebene Bedeutung hat.

Beispiele für Siloxane der Formel (I) sind MeHN-(CH₂)₃-[SiMe₂O]₁-₁₀SiMe₂- (CH₂)₃-NHMe, H₂N₋ (CH₂)₃-SiMe₂O- [SiMeViO]₁₋₁₀- [SiMe₂O]₁₋₁₀-SiMe₂- (CH₂)₃-NH₂ und H₂N- (CH₂)₃- [SiMe₂O]₁₋₁₀SiMe₂- (CH₂)₃-NH₂, wobei Me gleich Methylrest und Vi gleich Vinylrest bedeutet.

Bevorzugt handelt es sich bei den Siloxanen der Formel (I) um H₂N- (CH₂)₃- [Si (CH₃)₂O]₁₋₁₀Si (CH₃)₂- (CH₂)₃-NH₂, wobei H₂N- (CH₂)₃-[Si (CH₃)₂O] Si (CH₃)₂- (CH₂)₃-NH₂ besonders bevorzugt ist.

Die in der 1. Stufe des erfindungsgemäßen Verfahrens eingesetzten Siloxane (a1) haben eine Viskosität von bevorzugt 1 bis 100 mm²/s, besonders bevorzugt 4 bis 10 mm²/s, jeweils bei 25°C.

Bevorzugt handelt es sich bei den im Wesentlichen linearen, endständige Si-gebundene Hydroxylgruppen aufweisenden Organopolysiloxanen (a2) um Siloxane der Formel

OH- [SiR²₂O]ₘSiR²₂-OH (II),

wobei
R² gleich oder verschieden sein kann und einen einwertigen, gegebenenfalls substituierten Kohlenwasserstoffrest bedeutet, und
m 0 oder eine ganze Zahl, bevorzugt 1 bis 10 000, besonders bevorzugt 10 bis 100, ist.

Beispiele für Rest R² sind die oben für R angegebenen Beispiele für gegebenenfalls substituierte Kohlenwasserstoffreste.

Bevorzugt handelt es sich bei Rest R² um Kohlenwasserstoffreste mit 1 bis 20 Kohlenstoffatomen, besonders bevorzugt um den Methyl-, den Vinyl- oder den Phenylrest.

Obwohl in Formel (II) nicht angegeben, können bis zu 5 Molprozent der Diorganosiloxaneinheiten durch andere Siloxaneinheiten, wie z.B. R²SiO_{3/2}- und SiO_{4/2}- Einheiten, ersetzt sein, wobei R² die vorstehend dafür angegebene Bedeutung hat.

Beispiele für Siloxane der Formel (II) sind OH- [SiMe₂O]₁₀₋₅₀₀-SiMe₂-OH, wobei OH- [SiMe₂O]₁₀₋₂₀₀SiMe₂-OH bevorzugt und OH-[SiMe₂O]₁₅₋₅₀SiMe₂-OH besonders bevorzugt sind, jeweils mit Me gleich Methylrest.

Die in der 1. Stufe des erfindungsgemäßen Verfahrens einsetzbaren, im Wesentlichen linearen Siloxane (a2) haben eine Viskosität von bevorzugt 10 bis 100 000 mm²/s, besonders bevorzugt 10 bis 500 mm²/s, jeweils bei 25°C.

Bei den Cyclosiloxanen (a2) handelt es sich bevorzugt um solche der Formel

(SiR³₂O)ₐ (III),

wobei
R³ gleich oder verschieden sein kann und einen einwertigen, gegebenenfalls substituierten Kohlenwasserstoffrest bedeutet und
a eine ganze Zahl von größer oder gleich 3, bevorzugt 3, 4, 5 oder 6, ist.

Beispiele für Rest R³ sind die oben für R angegebenen Beispiele für gegebenenfalls substituierte Kohlenwasserstoffreste.

Bevorzugt handelt es sich bei Rest R³ um Kohlenwasserstoffreste mit 1 bis 20 Kohlenstoffatomen, besonders bevorzugt um den Methylrest.

Obwohl in Formel (III) nicht angegeben, können bis zu 5 Molprozent der Diorganosiloxaneinheiten durch andere Siloxaneinheiten, wie z.B. R³SiO_{3/2}- und SiO_{4/2} -Einheiten, ersetzt sein, wobei R³ die vorstehend dafür angegebene Bedeutung hat.

Beispiele für Siloxane der Formel (III) sind Hexamethylcyclotrisiloxan (D3), Octamethyltetrasiloxan (D4), Decamethylpentasiloxan (D5) und Dodecamethylhexasiloxan (D6), Phenylcyclosiloxane, Phenylmethylcyclosiloxane, Vinylcyclosiloxane und Vinylmethylcyclosiloxane verschiedener Ringgröße.

Bevorzugt handelt es sich bei den Cyclosiloxanen der Formel (III) um Octamethyltetrasiloxan (D4), Decamethylpentasiloxan (D5) und Dodecamethylhexasiloxan (D6), besonders bevorzugt um Octamethyltetrasiloxan (D4) und Decamethylpentasiloxan (D5).

Bei den erfindungsgemäß eingesetzten Siloxanen (a2) kann es sich ausschließlich um im Wesentlichen lineare, endständige Si-gebundene Hydroxylgruppen aufweisende Organopolysiloxane oder ausschließlich um Cyclosiloxane oder um Gemische aus linearen und cyclischen Siloxanen handeln, wobei als Komponente (a2) bevorzugt Cyclosiloxane eingesetzt werden.

In der 1. Stufe des erfindungsgemäßen Verfahrens richtet sich das Mengenverhältnis von Siloxanen (a1) zu Siloxanen (a2) im Wesentlichen nach der Kettenlänge des gewünschten Endproduktes. Bevorzugt werden Siloxane (a2) in Mengen von 300 bis 20 000 Gewichtsteilen, besonders bevorzugt 300 bis 10 000 Gewichtsteilen, jeweils bezogen auf 100 Gewichtsteile Siloxan (a1), eingesetzt.

Falls erwünscht, können in der 1. Stufe des erfindungsgemäßen Verfahrens zusätzlich zu den Siloxanen (a1) und (a2) bereits Silazane (a3) eingesetzt werden. Dabei kann das Silazan zum Disiloxan hydrolysieren und während der Äquilibrierung zu Siloxan-Kettenenden abreagieren.

Bei den gegebenenenfalls eingesetzten Silazanen (a3) kann es sich um die gleichen Silazane handeln, die beim erfindungsgemäßen Verfahren als Komponente (B) eingesetzt werden.

Falls in der 1. Stufe des erfindungsgemäßen Verfahrens Silazan (a3) zugegeben wird, erfolgt diese Zugabe bevorzugt unterstöchiometrisch oder stöchiometrisch zum gesamten Wasser- und OH-Si-Gehalt der Siloxane (a1) und (a2) sowie des zugegebenen Equilibrierkatalysators. Im erfindungsgemäßen Äquilibrierungsschritt wird bevorzugt Silazan (a3) eingesetzt.

Falls in der 1. Stufe des erfindungsgemäßen Verfahrens Silazan (a3) zugegeben wird, handelt es sich um Mengen von besonders bevorzugt 0,1 bis 20 Gew.-Teilen, insbesondere 0,1 bis 5 Gew.-Teilen, jeweils bezogen auf 100 Gewichtsteile des Gesamtgewichts an Siloxane (a1) und (a2).

Bei den erfindungsgemäß eingesetzten Äquilibrierungskatalysatoren kann es sich um beliebige, bisher bekannte Äquilibrierungskatalysatoren oder deren Mischungen handeln.

Beispiele für Äquilibrierungskatalysatoren sind Alkalihydroxide, insbesondere Kalium-, Rubidium- und Cäsiumhydroxid, Alkalialkoholate, quaternäre Ammoniumhydroxide, wie Tetramethylammoniumhydroxid (TMAH) oder dessen Pentahydrat, Tetrabutylammoniumhydroxid, Benzyltrimethylammoniumhydroxid, Benzyltriethylammoniumhydroxid, auch Mischungen daraus, als wässrige oder alkoholische Lösung, Benzyltrimethylammoniumbutylat, β-Hydroxy-ethyltrimethylammonium-2-ethylhexanoat,
quaternäre Phosphoniumhydroxide, wie Tetramethylphosphoniumhydroxid, Tetraethylphosphoniumhydroxid, Tetra-n-butylphosphoniumhydroxid und Tri-n-butyl-3-[tris-(trimethylsiloxy)silyl]-n-propyl-phosphoniumhydroxid, deren Mischungen, sowie deren Silanolate und Siloxanolate;
Alkali- und Ammoniumorganosilanolate wie die Kalium-, Rubidium-Caesium-, Tetramethyl-, Tetrabutyl- und Benzyltrimethyl-Ammonium-Salze von Aminopropyldimethylsilanol, Aminomethyldimethylsilanol, Aminoalkyl- oder Aminoarylsilanolen, welche aus den jeweiligen Alkali- oder Ammoniumhydroxiden und den entsprechenden Aminosilanen hergestellt werden können,
Alkalisiloxanolate und Ammoniumorganosiloxanolate, wie Kalium-, Rubidium- Caesium-, Tetramethyl-, Tetrabutyl- und Benzyltrimethyl-Ammonium-Salze von linearen Siloxandiolen oder Aminosiloxanolen, welche aus den jeweiligen Alkali- oder Ammoniumhydroxiden mit D-Cyclen, OH-Siloxanen oder Diaminoalkylsiloxanen hergestellt werden können, Benzyltrimethylamrnoniumethylsiloxanolat, und Phosphor-Stickstoff-Verbindungen. Alle Katalysatoren können in wasserfreier Form, aber auch in wässriger oder alkoholischer Lösung zugegeben werden, wobei die quartären Phosphonium- und Ammoniumhydroxide und deren Silanolate und Siloxanolate wie zum Beispiel wässriges TMAH, TMAH-Pentahydrat, TMAH-Aminopropyldimethylsilanolat und TMAH-Siloxanolat bevorzugt und TMAH-Pentahydrat, TMAH-Aminopropyldimethylsilanolat und TMAH-Siloxanolat besonders bevorzugt sind.

In der 1. Stufe des erfindungsgemäßen Verfahrens werden Äqulibrierungskatalysatoren in Mengen von bevorzugt 0,01 bis 5 Gew.-Teilen, besonders bevorzugt 0,01 bis 2 Gew.-Teilen, jeweils bezogen auf 100 Gewichtsteile Siloxan (a1) eingesetzt.

Die Äquilibrierungsstufe des erfindungsgemäßen Verfahrens wird bevorzugt bei einer Temperatur von 60 bis 150°C, besonders bevorzugt von 80 bis 100°C, und dem Druck der umgebenden Atmosphäre, also 900 bis 1100 hPa, durchgeführt.

Die Äquilibrierungsstufe des erfindungsgemäßen Verfahrens kann in Anwesenheit oder Abwesenheit von organischen Lösungsmitteln durchgeführt werden, bevorzugt in Abwesenheit von organischen Lösungsmitteln. Falls Lösungsmittel eingesetzt werden, handelt es sich bevorzugt um aprotische gegenüber der Reaktionsmischung inerte Lösungsmittel.

Beispiele für gegebenenfalls eingesetzte organische Lösungsmittel sind Benzol, Toluol, Xylol, Dibutylether, Tetrahydrofuran, Dioxan, Ethylenglykoldimethylether, Ethylenglykoldiethylether, Dichlormethan, Trichlormethan, Tetrachlorkohlenstoff, Heptan, Isooktan und Cyclohexan.

Falls in der 1. Stufe des erfindungsgemäßen Verfahrens organische Lösungsmittel eingesetzt werden, handelt es sich um Mengen von bevorzugt bis zu 5 bis 500 Gewichtsteilen, besonders bevorzugt 10 bis 50 Gewichtsteilen, jeweils bezogen auf 100 Gewichtsteile des Gesamtgewichts an Siloxane (a1) und (a2).

Die Äquilibrierungsstufe des erfindungsgemäßen Verfahrens wird bevorzugt unter weitestgehendem Ausschluss von Luftfeuchtigkeit durchgeführt.

Die Äquilibrierungsstufe des erfindungsgemäßen Verfahrens wird bevorzugt in Inertgasatmosphäre, wie z.B. Stickstoff und Edelgase, bevorzugt Stickstoff oder Argon, durchgeführt.

Bei der Äquilibrierungsstufe des erfindungsgemäßen Verfahrens werden im Wesentlichen lineare, endständige SiC-gebundene Aminogruppen aufweisende Organopolysiloxane (A) mit einer Viskosität von bevorzugt 10 bis 5000 mm²/s, besonders bevorzugt 25 bis 500 mm²/s, jeweils bei 25°C, erhalten.

Bei der Äquilibrierungsstufe des erfindungsgemäßen Verfahrens werden im Wesentlichen lineare, endständige SiC-gebundene Aminogruppen aufweisende Organopolysiloxane (A) mit einem SilanolGehalt von bevorzugt 50 bis 5000 Gew.-ppm, besonders bevorzugt 100 bis 1000 Gew.-ppm, erhalten.

Der Silanolgehalt der Siloxane (A) kann in weiten Bereichen schwanken und beruht in erster Linie auf der Menge der in den Edukten bereits vorhandenen Silanolgruppen sowie auf nicht zu vermeidende Feuchtigkeit in den Edukten und in den Katalysatoren, aus der unter SiOSi-Spaltung im Edukt Silanolgruppen entstehen.

Das im Äquilibrierungsschritt erhaltene Reaktionsgemisch kann nach beliebigen und bisher bekannten Verfahren aufgearbeitet werden. Bevorzugt wird dabei der Äqulibrierungskatalysator deaktiviert und/oder abgetrennt. Gegebenenfalls eingesetztes organisches Lösungsmittel kann ganz oder teilweise destillativ entfernt werden. Diese Aufarbeitungsmaßnahmen können jedoch auch - falls erwünscht - nach einem späteren Verfahrensschritt erfolgen.

Nach einer besonders bevorzugten Verfahrensweise des erfindungsgemäßen Verfahrens wird nach Beendigung der Äquilibrierung der Äquilibrierungskatalysator deaktiviert. Bei Verwendung von Ammonium- oder Phosphoniumsalzen bzw. deren Silanolaten oder Siloxanolaten als Katalysator wird die Reaktionsmischung bevorzugt thermisch behandelt, besonders bevorzugt mindestens eine oder mehrere Stunden auf 150°C erhitzt. Nach der Hälfte der Dauer der thermischen Behandlung wird der Druck erst erniedrigt, vorzugsweise auf 500 bis 800 mbar, dann weiter erniedrigt, vorzugsweise auf 0,1 bis 10 mbar, wobei die Spaltprodukte der Katalysatoren und weitere flüchtige Verbindungen abdestilliert werden. Anschließend wird die so erhaltene, trübe Reaktionsmischung filtriert, wobei die Filtration ggf. unter einem erhöhten Druck von bevorzugt 2 bis 5 bar erfolgen kann, wobei eine klare, farblose Flüssigkeit erhalten wird. Falls erwünscht, kann die beschriebene Aufarbeitung auch dahingehend abgeändert werden, dass zuerst die (Druck-)Filtration durchgeführt wird und im Anschluss daran die Destillation. Bei Verwendung von anorganischen Alkalihydroxiden, deren Silanolaten oder Siloxanolaten als Katalysator wird nach der Äquilibrierung die Reaktionsmischung mit anorganischen oder organischen Säuren oder mit CO₂ neutralisiert und die Salze anschließend filtriert, wobei die Filtration ggf. unter einem erhöhten Druck von bevorzugt 2 bis 5 bar erfolgen kann, wobei man eine klare, farblose Flüssigkeit erhält.

Bei dem erfindungsgemäßen Verfahren werden Aminogruppen und Si-gebundene Hydroxylgruppen aufweisende Organopolysiloxane mit Silazanen der Formel (IV) umgesetzt.

In der 2. Stufe des erfindungsgemäßen Verfahrens erfolgt die Silazan-Zugabe bevorzugt stöchiometrisch zum Wasser- und OH-Si-Gehalt des Aminogruppen und Si-gebundene Hydroxylgruppen aufweisendes Organopolysiloxans (A) oder im Überschuss. Besonders bevorzugt wird Silazan (B) in Mengen von 0,1 bis 10 Gew.-Teilen, insbesondere 0,1 bis 6 Gew.-Teilen, jeweils bezogen auf 100 Gewichtsteile Aminogruppen und Si-gebundene Hydroxylgruppen aufweisendes Organopolysiloxan (A), eingesetzt.

Falls erwünscht kann die erfindungsgemäße Umsetzung mit Silazanen (B) in Anwesenheit von Katalysatoren durchgeführt werden, wie z.B. Brönsted- oder Lewis-Säuren wie Essigsäure, Ammoniumchlorid oder alkoholische Salzsäure.

Falls die 2. Stufe des erfindungsgemäßen Verfahrens in Anwesenheit von Katalysatoren durchgeführt wird, handelt es sich um Mengen von bevorzugt 0,01 bis 20 Gewichtsteilen, besonders bevorzugt 0,1 bis 1 Gewichtsteilen, jeweils bezogen auf 100 Gewichtsteile Aminogruppen und Si-gebundene Hydroxylgruppen aufweisendes Organopolysiloxan (A). In der 2. Stufe des erfindungsgemäßen Verfahrens wird bevorzugt kein Katalysator eingesetzt.

Die erfindungsgemäße Umsetzung mit Silazan (B) kann in Anwesenheit oder Abwesenheit von organischen Lösungsmitteln durchgeführt werden. Falls Lösungsmittel eingesetzt werden, handelt es sich bevorzugt um die gleichen, die auch in der Äqulibrierungsstufe eingesetzt werden können.

Falls die 2. Stufe des erfindungsgemäßen Verfahrens in Anwesenheit organischer Lösungsmittel durchgeführt wird, handelt es sich um Mengen von bevorzugt 5 bis 500 Gewichtsteilen, besonders bevorzugt 10 bis 50 Gewichtsteilen, jeweils bezogen auf 100 Gewichtsteile Aminogruppen und Si-gebundene Hydroxylgruppen aufweisendes Organopolysiloxan (A). In der 2. Stufe des erfindungsgemäßen Verfahrens wird bevorzugt kein organisches Lösungsmittel eingesetzt.

Die erfindungsgemäße Umsetzung mit Silazan (B) wird bevorzugt bei einer Temperatur von 25 bis 90°C, besonders bevorzugt von 60 bis 80°C, und dem Druck der umgebenden Atmosphäre, also 900 bis 1100 hPa, durchgeführt.

Die erfindungsgemäße Umsetzung mit Silazan wird unter weitestgehendem Ausschluss von Luftfeuchtigkeit durchgeführt und wird bevorzugt in Inertgasatmosphäre, wie z.B. Stickstoff und Edelgase, bevorzugt Stickstoff oder Argon, durchgeführt.

Das erfindungsgemäße Verfahren kann kontinuierlich, semikontinuierlich und diskontinuierlich durchgeführt werden, wobei die diskontinuierliche Verfahrensweise bevorzugt ist.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das nach der erfindungsgemäßen Umsetzung mit Silazan erhaltene rohe Reaktionsgemisch kann direkt in die Zielanwendung eingesetzt und weiterverarbeitet werden oder nach beliebigen und bisher bekannten Verfahren aufgearbeitet werden. Bei der Aufarbeitung wird bevorzugt eine sog. Vakuum-Entflüchtigung bei Temperaturen von 120 bis 175°C und einem Druck von 0,1 bis 5 mbar durchgeführt, bei der neben überschüssigem Silazan alle flüchtigen niedermolekularen Verbindungen wie z.B. niedermolekulare Aminoalkylsiloxane, Katalysator-Spaltprodukte, niedermolekulare D-Cyclen sowie organisches Lösungsmittel entfernt werden können.

Bei der erfindungsgemäßen Umsetzung mit Silazan werden im Wesentlichen lineare, endständige SiC-gebundene Aminogruppen aufweisende Organopolysiloxane mit einer Viskosität von bevorzugt 10 bis 20 000 mm²/s, besonders bevorzugt 10 bis 5000 mm²/s, jeweils bei 25°C, erhalten.

Die erfindungsgemäß hergestellten Organopolysiloxane sind bevorzugt transparent, farb- und geruchlos.

Die erfindungsgemäß hergestellten Organopolysiloxane haben einen Silanol-Gehalt von bevorzugt 0 bis 100 Gew.-ppm, besonders bevorzugt 0 bis 50 Gew.-ppm.

Die erfindungsgemäß hergestellten, endständige SiC-gebundene Aminogruppen aufweisenden Organopolysiloxane weisen vorzugsweise Aminzahlen zwischen 160 und 0,03 mg KOH/g auf, wobei besonders bevorzugt Organopolysiloxane mit Aminzahlen zwischen 160 und 2,0 mg KOH/g hergestellt werden.

Bei dem erfindungsgemäßen Verfahren werden Organopolysiloxane mit einem Gehalt an niedermolekularen Organocyclosiloxanen mit bis zu 9 Siliziumatomen von bevorzugt unter 1 Gew.-% erhalten.

Die erfindungsgemäßen, endständige SiC-gebundene Aminogruppen aufweisenden Organopolysiloxane können überall dort eingesetzt werden, wo auch bisher bereits Aminosiloxane eingesetzt worden sind, wie z.B. als reine, streng difunktionelle sog. Building Blocks bei der Copolymerisation mit Diisocyanaten, Säureestern, Säurechloriden und Säureanhydriden, ggf. im Gemisch mit organischen Diaminen oder Diolen als Kettenverlängerer. Die so hergestellten Copolymere können als Kunststoffadditiv dienen oder als 100%-Material zu optisch hochtransparenten, elastischen Folien oder Bauteilen verarbeitet werden. Derartige Folien können unter anderem für elastische, lichtdurchlässige und optisch transparente Verklebungen von mineralischen oder organischen Gläsern mit Naturstein oder Photovoltaik-Zellen eingesetzt werden. Des Weiteren besitzen solche Copolymere hervorragende release-Eigenschaften. Ferner können sie mit Epoxiden zu neuartigen Werkstoffen umgesetzt werden. Alle diese Copolymer-Anwendungen erfordern ein hohes Maß an Difunktionalität, um die hohen Polymerisationsgrade zu erreichen, die für gute Ziel-Eigenschaften der Copolymere unerlässlich sind.

Das erfindungsgemäße Verfahren hat den Vorteil, dass es sehr einfach in der Durchführung ist und die Kettenlänge gezielt eingestellt werden kann.

Des Weiteren hat das erfindungsgemäße Verfahren den Vorteil, dass es mit sehr gut reproduzierbaren Produktzusammensetzungen bevorzugt völlig silanol- und wasserfreie Produkte liefert, unabhängig von den Silanol- und Wassergehalten der eingesetzten Edukte.

Das erfindungsgemäße Verfahren hat den Vorteil, dass einfach verfügbare technische Rohstoffe eingesetzt und auf aufwändige Trocknungs- und Reinigungsschritte aller Edukte zu Beginn der Herstellung verzichtet werden kann, ebenso auf eine sorgfältige, wasserfreie Reaktionsführung.

Ein weiterer Vorteil des erfindungsgemäßen Verfahrens liegt in den bevorzugt kurzen Reaktionszeiten bei einer variablen Reaktionsführung.

Das erfindungsgemäße Verfahren hat den Vorteil, dass die Molekulargewichtsverteilung der Organopolysiloxane konstant reproduzierbar ist.

Die nach dem erfindungsgemäßen Verfahren hergestellten Siloxane haben den Vorteil, dass sie hervorragend geeignet sind zum Einsatz als sog. Building Blocks in Copolymeren, bei denen es auf reproduzierbare, gleichbleibende Produkteigenschaften mit einem hohen Funktionalitätsgrad ankommt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Herstellung von wasserfreiem Tetramethylammonium-3-Aminopropyl-dimethylsilanolat

In einen 250 ml-Dreihalsrundkolben, ausgestattet mit einem Magnetrührer, Argoneinlass und Kühler mit Trockenrohr, wurden 12,4 g (0,05 Mol) 1,3-Bis(3-aminopropyl)tetramethyldisiloxan, 18,1 g (88,12 mmol) Tetramethylammoniumhydroxid-pentahydrat und 30 ml Tetrahydrofuran gegeben. Die Mischung wurde unter Rückfluss unter Schutzgas-Atmosphäre für 5 Stunden erhitzt.

Beim langsamen Abkühlen fiel aus der gelb-braunen Mutterlauge ein weißer, kristalliner Niederschlag aus. Der Kolben wurde in ein Eisbad gestellt und der Feststoff anschließend abgesaugt. Man erhielt einen farblosen Feststoff, der 5 h bei einem Druck von 0,1 mbar. getrocknet wurde. Anschließend wurde er aus wasserfreiem THF umkristallisiert und über eine Schlenkfritte unter Schutzgas abgesaugt.

Das hygroskopische Produkt wurde bei Raumtemperatur in einem Exsikkator über Blaugel unter Argon aufbewahrt.

### Beispiel 1

In einen 1000 ml-Dreihalsrundkolben mit Innenthermometer, mechanischem Rührer, Tropftrichter und Schutzgaseinlass wurden 600 g (= 4,73 mol) Octamethylcyclotetrasiloxan, 55,86 g (= 0,22 mmol) Bis(3-aminopropyl)tetramethyldisiloxan und 0,6 g (= 3,3 mmol) Tetramethylammoniumhydroxid-Pentahydrat gegeben. Der Kolbeninhalt wurde 12 h lang mit einem Ölbad auf 80°C unter Rühren unter Argon als Schutzgas erhitzt.

Ein Si-29-NMR der Mischung zeigte, dass das eingesetzte Bis(3-aminopropyl)tetramethyldisiloxan zu 98 % umgesetzt war. Der Gehalt an Cyclosiloxanen betrug in der Reaktionsmischung ca. 15% der Ausgangsmenge.

Danach wurde auf 150°C erhitzt und der Ansatz eine halbe Stunde bei dieser Temperatur gerührt. Anschließend wurde langsam und vorsichtig ein Vakuum von 800 hPa angelegt und unter langsamer Druckerniedrigung auf 10 hPa flüchtige Anteile abdestilliert. Danach wurde der Ansatz auf Raumtemperatur abgekühlt und bei einem Druck von 2 bar filtriert. Es wurden Aminosiloxane mit einer Viskosität von 50 mm²/s und einem Silanol-Gehalt 940 Gew.-ppm erhalten.

Anschließend wurden 20 g (= 87 mmol) 3-[(2,2-Dimethyl-1,2-azasilolidin-1-yl)(dimethyl)silyl]-1-propanamin (Azazyklus) zum Ansatz zugegeben und 30 min auf 80°C erhitzt. Danach wurde der Kolbeninhalt bei einem Druck von 1 mbar und 170°C in einem Kurzwegverdampfer entflüchtigt.

Man erhielt 552 g klares, farbloses Öl (84 % der theoretischen Ausbeute). Die durch Si-29-NMR ermittelte Molekülmasse des Produktes betrug 2854 g/mol (durchschnittlich 17,6 Si-Einheiten). Der Gehalt an Silanol-Gruppen betrug 15 Gew.-ppm.

### Beispiel 2

Die in Beispiel 1 beschriebene Verfahrensweise wird wiederholt mit der Abänderung, dass anstelle von 55,86 g Bis(3-aminopropyl)tetramethyldisiloxan 167,58 g (= 0,67 mol) Bis(3-aminopropyl)tetramethyldisiloxan eingesetzt wurden.

Man erhielt 631 g klares, farbloses Öl (82 % der theoretischen Ausbeute). Die durch Si-29-NMR ermittelte Molekülmasse des Produktes betrug 1016 g/mol (durchschnittlich 12,6 Si-Einheiten). Der Gehalt an Silanol-Gruppen betrug 34 Gew.-ppm.

### Beispiel 3

In einen 1000 ml-Dreihalsrundkolben mit Innenthermometer, mechanischem Rührer, Tropftrichter und Schutzgaseinlass wurden 31 g (= 0,104 mol) Octamethylcyclotetrasiloxan, 6,41 g (= 0,026 mol) Bis(3-aminopropyl)tetramethyldisiloxan und 0,6 g (= 3,3 mmol) Tetramethylammoniumhydroxid-Pentahydrat gegeben. Der Kolbeninhalt wurde 2 Stunden lang mit einem Ölbad auf 80°C unter Rühren unter Argon als Schutzgas erhitzt, dabei trat eine deutliche Trübung ein. Anschließend wurden weitere 569 g (= 1,92 mol) Octamethylcyclotetrasiloxan und 0,6 g (= 3,3 mmol) Tetramethylammoniumhydroxid-Pentahydrat zugegeben und der Ansatz weitere 6 Stunden unter Rühren auf 80°C erhitzt.

Ein Si-29-NMR der Mischung zeigte, dass danach das eingesetzte Bis(3-aminopropyl)tetramethyldisiloxan zu 95 % umgesetzt war.

Der Gehalt an Cyclosiloxanen betrug in der Reaktionsmischung ca. 10 % der Ausgangsmenge.

Danach wurde auf 150°C erhitzt und der Ansatz eine halbe Stunde bei dieser Temperatur gerührt. Anschließend wurde langsam und vorsichtig ein Vakuum von 800 hPa angelegt und unter langsamer Druckerniedrigung auf 10 mbar wurden flüchtige Anteile abdestilliert. Danach wurde der Ansatz auf Raumtemperatur abgekühlt und bei einem Druck von 2 bar filtriert. Es wurden Aminosiloxane mit einer Viskosität von ca. 1000 mm²/s und einem Silanol-Gehalt von 1073 Gew.-ppm erhalten.

Anschließend wurden 20 g (= 87 mmol) 3-[(2,2-Dimethyl-1,2-azasilolidin-1-yl)(dimethyl)silyl]-1-propanamin (Azazyklus) zum Ansatz zugegeben und zwei Stunden auf 80°C erhitzt. Danach wurde der Kolbeninhalt bei einem Druck von 1 mbar und 170°C in einem Kurzwegverdampfer entflüchtigt.

Man erhielt 530 g klares, farbloses Öl (87 % der theoretischen Ausbeute). Die durch Si-29-NMR ermittelte Molekülmasse des Produktes betrug 21600 g/mol (durchschnittlich 289 Silicium-Einheiten). Der Gehalt an Silanol-Gruppen betrug 8 Gew.-ppm.

### Vergleichsbeispiel 1

Zunächst wurden Octamethylcyclotetrasiloxan und Bis(3-aminopropyl)tetramethyldisiloxan über eine Vigreux-Kolonne fraktioniert destilliert.

In einen 1000 ml-Dreihalsrundkolben mit Innenthermometer, mechanischem Rührer, Tropftrichter und Schutzgaseinlass wurden 31 g (= 0,104 mol) Octamethylcyclotetrasiloxan, 6,41 g (= 0,026 mol) Bis(3-aminopropyl)tetramethyldisiloxan und 0,05 g (= 0,24 mmol) Tetramethylammonium-Aminopropyldimethylsilanolat gegeben. Der trübe Kolbeninhalt wurde 12 Stunden lang mit einem Ölbad auf 80°C unter Rühren unter Argon als Schutzgas erhitzt. Anschließend wurden weitere 569 g (= 1,92 mol) Octamethylcyclotetrasiloxan zugegeben und der Ansatz weitere 12 Stunden unter Rühren auf 80°C erhitzt.

Ein Si-29-NMR der Mischung zeigte, dass danach das eingesetzte Bis(3-aminopropyl)tetramethyldisiloxan zu 95 % umgesetzt war. Der Gehalt an Cyclosiloxanen betrug in der Reaktionsmischung ca. 12 % der Ausgangsmenge.

Danach wurde auf 150°C erhitzt und der Ansatz eine halbe Stunde bei dieser Temperatur gerührt. Anschließend wurde langsam und vorsichtig ein Vakuum von 800 mbar angelegt und unter langsamer Druckerniedrigung auf 10 mbar flüchtige Anteile abdestilliert. Danach wurde der Ansatz auf Raumtemperatur abgekühlt und bei einem Druck von 2 bar filtriert. Es wurden Aminosiloxane mit einer Viskosität von 1000 mm²/s und einem Silanol-Gehalt von 123 Gew.-ppm erhalten.

Danach wurde der Kolbeninhalt bei einem Druck von 1 mbar und 170°C in einem Kurzwegverdampfer entflüchtigt.

Man erhielt 490 g klares, farbloses Öl (81 % der theoretischen Ausbeute). Die durch Si-29-NMR ermittelte Molekülmasse des Produktes betrug 19800 g/mol (durchschnittlich 267 Si-Einheiten). Der Gehalt an Silanol-Gruppen betrug 145 Gew.-ppm.

### Beispiel 4

In einen 1000 ml-Dreihalsrundkolben mit Innenthermometer, mechanischem Rührer, Tropftrichter und Schutzgaseinlass wurden 139 g (49,1 mmol) α,β-Dihydroxypolydiorganosiloxan mit einer durchschnittlichen Kettenlänge von 38 Si-Einheiten mit einem OH-Si-Gehalt von ca. 12000 Gew.-ppm und einem Wassergehalt von 1540 Gew.-ppm und 108,30 g (365 mmol) Cyclo-Octamethyltetrasiloxan, 34 g (137 mmol) Bis(3-aminopropyl)tetrame-thyldisiloxan, 15,8 g (68,5 mmol) 3-[(2,2-Dimethyl-1,2-aza-silolidin-1-yl) (dimethyl)silyl]-1-propanamin),0,6 g (3,3 mmol) TMAH-Pentahydrat vereinigt und 6 h lang mit einem Ölbad auf 80°C unter Rühren unter Argon als Schutzgas erhitzt. Der Ansatz wurde nach einigen Minuten trüb.

Nach 2 h Rührzeit wurden nochmals 300 g D4-Cyclen und weitere 0,6 g (= 3,3 mmol) TMAH-Pentahydrat zugegeben und der Ansatz weitere 6 h bei 80°C gerührt.

Ein Si-29-NMR der Mischung zeigte, dass das eingesetzte Bis(3-aminopropyl)tetramethyldisiloxan zu 95 % umgesetzt war. Der Gehalt an Cyclosiloxanen betrug in der Reaktionsmischung ca. 12 % der Ausgangsmenge.

Danach wurde bei Normaldruck auf 150°C erhitzt und der Ansatz eine halbe Stunde bei dieser Temperatur gerührt. Anschließend wurde langsam und vorsichtig ein Vakuum von 800 mbar angelegt und unter langsamer Erhöhung des Drucks auf 10 mbar flüchtige Anteile abdestilliert. Danach wurde der Ansatz auf Raumtemperatur abgekühlt und bei einem Druck von 2 bar filtriert. Es wurden Aminosiloxane mit einer Viskosität von 50 mm²/s und einem Silanol-Gehalt von 45 Gew.-ppm erhalten.

Anschließend wurden 20 g (= 87 mmol) 3-[(2,2-Dimethyl-1,2-azasilolidin-1-yl) (dimethyl)silyl]-1-propanamin (Azazyklus) zum Ansatz zugegeben und zwei Stunden auf 80°C erhitzt. Danach wurde der Kolbeninhalt bei einem Druck von 1 mbar und 170°C in einem Kurzwegverdampfer entflüchtigt.

Man erhielt 480 g klares, farbloses Öl (80 % der theoretischen Ausbeute). Die durch Si-29-NMR ermittelte Molekülmasse des Produktes betrug 2454 g/mol (durchschnittlich 32 Si-Einheiten). Der Gehalt an Silanol-Gruppen betrug 5 Gew.-ppm.

### Beispiel 5

In einen 1000 ml-Dreihalsrundkolben mit Innenthermometer, mechanischem Rührer, Tropftrichter und Schutzgaseinlass wurde eine Mischung aus 20,3 g (7,16 mmol) α,β-Dihydroxypolydiorganosiloxan mit einer durchschnittlichen Kettenlänge von 38 Si-Einheiten mit einem OH-Si-Gehalt von ca. 12000 Gew.-ppm und einem Wassergehalt von 1540 Gew.-ppm, 11,78 g (39,8 mmol) Cyclo-Octamethyltetrasiloxan, 4,42 g (17,8 mmol) Bis(3-aminopropyl)tetramethyldisiloxan, 2,05 g (8,9 mmol) 3-[(2,2-Dimethyl-1,2-azasi-lolidin-1-yl) (dimethyl)silyl]-1-propanamin), 1 g (4,9 mmol) wasserfreies Tetramethylammonium-3-Aminopropyldimethylsilanolat gegeben und 2 h lang mit einem Ölbad auf 80°C unter Rühren unter Argon als Schutzgas erhitzt. Anschließend wurden weitere 561 g (= 1,89 mol) Octamethylcyclotetrasiloxan und 1 g (4,9 mmol) wasserfreies Tetramethylammonium-3-Aminopropyldimethylsilanolat zugegeben und der Ansatz weitere 6 Stunden unter Rühren auf 80°C erhitzt.

Ein Si-29-NMR der Mischung zeigte, dass danach das eingesetzte Bis(3-aminopropyl)tetramethyldisiloxan zu 95% und das 3-[(2,2-Dimethyl-1,2-azasilolidin-1-yl) (dimethyl) silyl]-1-propanamin) vollständig umgesetzt war. Der Gehalt an Cyclosiloxanen betrug in der Reaktionsmischung ca. 10 % der Ausgangsmenge.

Danach wurde bei Normaldruck auf 150°C erhitzt und der Ansatz eine halbe Stunde bei dieser Temperatur gerührt. Anschließend wurde langsam und vorsichtig ein Druck von 800 mbar angelegt und unter langsamer Erhöhung des Vakuums auf 10 mbar flüchtige Anteile abdestilliert. Danach wurde der Ansatz auf Raumtemperatur abgekühlt und bei einem Druck von 2 bar filtriert. Es wurden Aminosiloxane mit einer Viskosität von ca. 1000 mm²/s und einem Silanol-Gehalt von 22 Gew.-ppm erhalten.

Anschließend wurden 10 g (= 48 mmol) 3-[(2,2-Dimethyl-1,2-aza-silolidin-1-yl)(dimethyl)silyl]-1-propanamin zugegeben und zwei Stunden auf 80°C erhitzt. Danach wurde der Kolbeninhalt bei einem Druck von 1 mbar und 170°C in einem Kurzwegverdampfer entflüchtigt.

Man erhielt 475 g klares, farbloses Öl (79 % der theoretischen Ausbeute). Die durch Si-29-NMR ermittelte Molekülmasse des Produktes betrug 22605 g/mol (durchschnittlich 304 Si-Einheiten). Der Gehalt an Silanol-Gruppen betrug 15 Gew.-ppm.

### Beispiel 6

Die in Beispiel 1 beschriebene Arbeitsweise wurde wiederholt mit der Änderung, dass die Äquilibrierung bei einer Temperatur von 110°C und einem Druck von 300 mbar durchgeführt wurde, wobei mit einer Destillationsbrücke dabei kontinuierlich flüchtige Anteile aus der Mischung entfernt wurden, und die Umsetzung mit 3-[(2,2-Dimethyl-1,2-azasilolidin-1-yl)(dimethyl)silyl]-1-propanamin vor der Druckfiltration bei 2 bar und unter Zugabe von 50 mg wasserfreiem NH₄Cl erfolgte.

Man erhielt 575 g eines klaren, farblosen Öls (85 % der theoretischen Ausbeute). Die durch Si-29-NMR ermittelte Molekülmasse des Produktes betrug 2731 g/mol (durchschnittlich 35,7 Si-Einheiten). Der Gehalt an Silanol-Gruppen betrug 3 Gew.-ppm.

Im NMR waren keine MeOSi-Gruppen detektierbar, mit Me gleich Methylgruppe.

### Beispiel 7

Die in Beispiel 2 beschriebene Arbeitsweise wurde wiederholt mit der Änderung, dass die Äquilibrierung bei einer Temperatur von 110°C und einem Druck von 300 mbar durchgeführt wurde, wobei mit einer Destillationsbrücke dabei kontinuierlich flüchtige Anteile aus der Mischung entfernt wurden, und die Umsetzung mit 3-[(2,2-Dimethyl-1,2-azasilolidin-1-yl) (dimethyl)silyl]-1-propanamin vor der Druckfiltration bei 2 bar und unter Zugabe von 50 mg wasserfreiem NH₄Cl erfolgte.

Man erhielt 654 g eines klaren, farblosen Öls (83 % der theoretischen Ausbeute). Die durch Si-29-NMR ermittelte Molekülmasse des Produktes betrug 1073 g/mol (durchschnittlich 13,0 Si-Einheiten). Der Gehalt an Silanol-Gruppen betrug 4 Gew.-ppm.

Im NMR waren keine MeOSi-Gruppen detektierbar, mit Me gleich Methylgruppe.

### Beispiel 8

Die in Beispiel 3 beschriebene Arbeitsweise wurde wiederholt mit der Änderung, dass die Äquilibrierung bei einer Temperatur von 110°C und einem Druck von 300 mbar durchgeführt wurde, wobei mit einer Destillationsbrücke dabei kontinuierlich flüchtige Anteile aus der Mischung entfernt wurden, und die Umsetzung mit 3-[(2,2-Dimethyl-1,2-azasilolidin-1-yl) (dimethyl)silyl]-1-propanamin vor der Druckfiltration bei 2 bar und unter Zugabe von 50 mg wasserfreiem NH₄Cl erfolgte.

Man erhielt 520 g eines klaren, farblosen Öls (83 % der theoretischen Ausbeute). Die durch Si-29-NMR ermittelte Molekülmasse des Produktes betrug 20950 g/mol (durchschnittlich 281,4 Si-Einheiten). Der Gehalt an Silanol-Gruppen betrug 11 Gew.-ppm. Im NMR waren keine MeOSi-Gruppen detektierbar, mit Me gleich Methylgruppe.

### Beispiel 9

Die in Beispiel 6 beschriebene Arbeitsweise wurde wiederholt mit der Änderung, dass anstelle von 600 g Octamethylcyclotetrasiloxan 600 g α,ω-Dihydroxypolydiorganosiloxan mit einer durchschnittlichen Kettenlänge von 29,3 Si-Einheiten mit einem OH-Si-Gehalt von ca. 15500 ppm und einem Wassergehalt von 140 ppm eingesetzt wurden.

Man erhielt 548 g eines klaren, farblosen Öls (81 % der theoretischen Ausbeute). Die durch Si-29-NMR ermittelte Molekülmasse des Produktes betrug 2762 g/mol (durchschnittlich 35,9 Si-Einheiten). Der Gehalt an Silanol-Gruppen betrug 6 Gew.-ppm.

Im NMR waren keine MeOSi-Gruppen detektierbar, mit Me gleich Methylgruppe.

### Beispiel 10

Die in Beispiel 8 beschriebene Arbeitsweise wurde wiederholt mit der Änderung, dass anstelle von 31 g Octamethylcyclotetrasiloxan 31 g α,ω-Dihydroxypolydiorganosiloxan mit einer durchschnittlichen Kettenlänge von 29,3 Si-Einheiten mit einem OH-Si-Gehalt von ca. 15500 ppm und einem Wassergehalt von 140 ppm eingesetzt wurden.

Man erhielt 515 g eines klaren, farblosen Öls (82 % der theoretischen Ausbeute). Die durch Si-29-NMR ermittelte Molekülmasse des Produktes betrug 22397 g/mol (durchschnittlich 298,7 Si-Einheiten). Der Gehalt an Silanol-Gruppen betrug 2 Gew.-ppm. Im NMR waren keine MeOSi-Gruppen detektierbar, mit Me gleich Methylgruppe.

### Beispiel 11

In einen 2000 ml-Dreihalsrundkolben mit Innenthermometer, mechanischem Rührer, Tropftrichter und Schutzgaseinlass wurden 369 g (169 mmol) α,ω-Dihydroxypolydiorganosiloxan mit einer durchschnittlichen Kettenlänge von 29 Si-Einheiten, einem OH-Si-Gehalt von ca. 15540 Gew.-ppm und einem Wassergehalt von 140 Gew.-ppm vorgelegt.

Dazu wurden 115,2 g Destillat aus der KWD-Entflüchtigung ähnlicher Equilibrier-Ansätze gegeben, das laut NMR-Analytik aus einem Gemisch aus
- 73,8 g (0,3 mol) Bis(3-aminopropyl)tetramethyldisiloxan,
- 32,8 g (0,44 mol) eines Gemisches aus cyclischen Methylsiloxanen enthaltend überwiegend D4-D6-Cyclen und
- 8,6 g (0,037 mol) 3-[(2,2-Dimethyl-1,2-azasilolidin-1-yl)(dimethyl)silyl]-1-propanamin
bestand.

Nach Zugabe von 50 mg wasserfreiem NH₄Cl wurde unter Rühren 30 Minuten mit einem Ölbad auf 80°C unter Argon als Schutzgas erhitzt.

Der Tropftrichter wurde durch eine Destillationsbrücke ersetzt, 1 g (5,5 mmol) TMAH-Pentahydrat zugegeben und der Ansatz 2 h lang unter einem Druck von 300 mbar unter Rühren mit einem Ölbad auf 110°C erhitzt.

Anschließend wurde die Apparatur mit Argon auf Normaldruck gebracht, 515 g (0,24 mol) α,ω-Dihydroxypolydiorganosiloxan sowie 1 g (5,5 mmol) TMAH-Pentahydrat zugegeben und die Mischung 2 h lang unter einem Druck von 300 mbar unter Rühren mit einem Ölbad auf 110°C erhitzt.

Die Apparatur wurde mit Argon als Schutzgas auf Normaldruck gebracht und 30 Minuten auf 150°C unter Rühren erhitzt. Anschließend wurde langsam und vorsichtig ein Druck von 800 mbar angelegt und unter langsamer Erniedrigung des Drucks auf 10 mbar flüchtige Anteile abdestilliert. Die anfallenden Destillate wurden verworfen.

Die Apparatur wurde mit Argon als Schutzgas auf Normaldruck gebracht und auf 80°C abgekühlt. Dann wurden 50 mg (0,93 mmol) wasserfreies NH₄Cl sowie 20 g (87 mmol) 3-[(2,2-Dimethyl-1,2-azasilolidin-1-yl)(dimethylsilyl]-1-propanamin zugegeben und 30 min bei dieser Temperatur gerührt.

Anschließend wurde auf Raumtemperatur abgekühlt und bei einem Druck von 2 bar filtriert.

Das Filtrat wurde bei einem Druck von 1 mbar und 170°C in einem Kurzwegverdampfer (KWD) entflüchtigt.

Man erhielt dabei 846 g eines klaren, farblosen Öls (83 % der theoretischen Ausbeute). Die durch Si-29-NMR ermittelte Molekülmasse des Produktes betrug 2943 g/mol (durchschnittlich 38,6 Si-Einheiten). Der Gehalt an Silanol-Gruppen betrug 6 Gew.-ppm.

Im Si-29-NMR waren keine MeOSi-Gruppen nachweisbar, mit Me gleich Methylgruppe.

Das Destillat aus der KWD-Entflüchtigung wurde gesammelt und in analog durchgeführten Ansätzen wieder eingesetzt.

### Beispiel 12

Beispiel 11 wurde wiederholt mit der Änderung, dass die gesamte Menge an α,ω-Dihydroxypolydiorganosiloxan (884 g = 2,48 mol) zu Beginn der Umsetzung in einer Portion zum Destillat aus der KWD-Entflüchtigung gegeben wurde. Nach Zugabe von 50 mg (0,93 mmol) wasserfreiem NH₄Cl wurde unter Rühren 30 Minuten mit einem Ölbad auf 80°C unter Argon als Schutzgas erhitzt.

Anschließend wurde der Tropftrichter durch eine Destillationsbrücke ersetzt, 2 g (11 mmol) TMAH-Pentahydrat zugegeben und der Ansatz 2 h lang unter einem Druck von 300 mbar unter Rühren mit einem Ölbad auf 110°C erhitzt.

Man erhielt 806 g eines klaren, farblosen Öls (78 % der theoretischen Ausbeute). Die durch Si-29-NMR ermittelte Molekülmasse des Produktes betrug 3046 g/mol (durchschnittlich 40 Si-Einheiten). Der Gehalt an Silanol-Gruppen betrug 9 Gew.-ppm.

Im Si-29-NMR waren keine MeOSi-Gruppen nachweisbar, mit Me gleich Methylgruppe.

Das Destillat aus der KWD-Entflüchtigung wurde gesammelt und in analog durchgeführten Ansätzen wieder eingesetzt.

### Beispiel 13

Der Ansatz nach Beispiel 11 wurde wiederholt mit der Änderung, dass die Zugabemengen an α,ω-Dihydroxypolydiorganosiloxan 184 g (84 mmol) und 758 g (0,424 mol) betrugen. Die Zugabemenge an Entflüchtigungsdestillat war 57,5 g. Die Destillat-Zusammensetzung wurde mittels NMR analysiert und es bestand aus einem Gemisch aus
- 36,82 g (148 mmol) Bis(3-aminopropyl)tetramethyldisiloxan,
- 16,35 g (219 mmol) eines Gemisches aus cyclischen Methylsiloxanen enthaltend überwiegend D4-D6-Cyclen und
- 4,29 g (18 mmol) 3-[(2,2-Dimethyl-1,2-azasilolidin-1-yl)(dimethyl)silyl]-1-propanamin.

Man erhielt 865 g eines klaren, farblosen Öls (85 % der theoretischen Ausbeute). Die durch Si-29-NMR ermittelte Molekülmasse des Produktes betrug 5913 g/mol (durchschnittlich 78,6 Si-Einheiten). Der Gehalt an Silanol-Gruppen betrug 0 Gew.-ppm.

Im Si-29-NMR waren keine MeOSi-Gruppen nachweisbar, mit Me gleich Methylgruppe.

Das Destillat aus der KWD-Entflüchtigung wurde gesammelt und in analog durchgeführten Ansätzen wieder eingesetzt.

### Beispiel 14

Der Ansatz nach Beispiel 11 wurde wiederholt mit der Änderung, dass die Zugabemengen an α,ω-Dihydroxypolydiorganosiloxan 55,3 g (25 mmol) und 927 g (0,424 mol) betrugen. Die Zugabe-Menge an Entflüchtigungsdestillat betrug 17,25 g. Dessen Zusammensetzung wurde mittels NMR analysiert. Es bestand aus einem Gemisch aus
- 11,05 g (44 mmol) Bis(3-aminopropyl)tetramethyldisiloxan,
- 4,91 g (66 mmol) eines Gemisches aus cyclischen Methylsiloxanen enthaltend überwiegend D4-D6-Cyclen und
- 1,29 g (5,6 mmol) 3-[(2,2-Dimethyl-1,2-azasilolidin-1-yl)(dimethyl)silyl]-1-propanamin.

Man erhielt 877 g eines klaren, farblosen Öls (86 % der theoretischen Ausbeute). Die durch Si-29-NMR ermittelte Molekülmasse des Produktes betrug 19930 g/mol (durchschnittlich 268 Si-Einheiten). Der Gehalt an Silanol-Gruppen betrug 13 Gew.-ppm.

Im Si-29-NMR waren keine MeOSi-Gruppen nachweisbar, mit Me gleich Methylgruppe.

Das Destillat aus der KWD-Entflüchtigung wurde gesammelt und in analog durchgeführten Ansätzen wieder eingesetzt.

### Beispiel 15

In einen 4000 ml-Dreihalsrundkolben mit Innenthermometer, mechanischem Rührer, Tropftrichter, Rückflusskühler und Schutzgaseinlass wurden 1236 g (0,530 mol) α,ω-Dihydroxypolydiorganosiloxan mit einer durchschnittlichen Kettenlänge von 31 Siloxaneinheiten, einem OH-Si-Gehalt von ca. 14570 Gew.-ppm und einem Wassergehalt von 250 Gew.-ppm, 255,5 g (1,7347 mol) 3-(Methoxy-dimethylsilyl)propylamin und 50 mg (0,93 mmol) wasserfreies NH₄Cl vorgelegt.

Dazu wurden 50 ml (2,78 mol) destilliertes Wasser zugetropft. Anschließend wurde unter Rühren 10 Minuten lang mit einem Ölbad auf 80°C unter Argon als Schutzgas erhitzt.

Der Tropftrichter wurde durch eine Destillationsbrücke ersetzt, 8 g (22 mmol) TMAH-Pentahydrat zugegeben und mit einem Ölbad auf 110°C erhitzt. Parallel wurde der Druck schrittweise auf 300 mbar erniedrigt und 2 h unter diesen Bedingungen gerührt.

Anschließend wurde die Apparatur mit Argon auf Normaldruck gebracht, 1508 g (0,646 mol) α,ω-Dihydroxypolydiorganosiloxan und 4 g (11 mmol) TMAH-Pentahydrat zugegeben und die Mischung weitere 2 h lang unter einem Druck von 300 mbar unter Rühren mit einem Ölbad auf 110°C erhitzt. Das dabei anfallende Destillat wurde verworfen.

Die Apparatur wurde mit Argon als Schutzgas auf Normaldruck gebracht und 30 Minuten auf 150°C unter Rühren erhitzt. Anschließend wurde langsam und vorsichtig ein Druck von 800 mbar angelegt und unter langsamer Erniedrigung des Drucks auf 10 mbar flüchtige Anteile abdestilliert. Alle bisher angefallenen Destillate wurden verworfen. Es wurden 2494 g eines Öls erhalten.

Die Apparatur wurde mit Argon als Schutzgas auf Normaldruck gebracht und auf 80°C abgekühlt. Dann wurden 50 mg (0,93 mmol) wasserfreies NH₄Cl sowie 20 g (= 87 mmol) 3-[(2,2-Dimethyl-1,2-azasilolidin-1-yl) (dimethyl)silyl]-1-propanamin zugegeben und 30 min bei dieser Temperatur gerührt. Anschließend wurde auf Raumtemperatur abgekühlt und bei einem Druck von 2 bar filtriert.

Das klare farblose Filtrat wurde bei einem Druck von 1 mbar und 170°C in einem Kurzwegverdampfer (KWD) entflüchtigt.

Man erhielt dabei 2420 g eines klaren, farblosen Öls (77 % der theoretischen Ausbeute). Die durch Si-29-NMR ermittelte Molekülmasse des Produktes betrug 3234 g/mol (durchschnittlich 42 Si-Einheiten). Der Gehalt an Silanol-Gruppen betrug 10 Gew.-ppm.

Im Si-29-NMR waren keine MeOSi-Gruppen nachweisbar, mit Me gleich Methylgruppe.

Das Destillat aus der KWD-Entflüchtigung wurde gesammelt und in analog durchgeführten Ansätzen wieder eingesetzt.

## Patentansprüche

1. Verfahren zur Herstellung von Aminogruppen aufweisenden Organopolysiloxanen, **dadurch gekennzeichnet, dass**
(A) Aminogruppen und Si-gebundene Hydroxylgruppen aufweisende Organosiliciumverbindungen, erhältlich durch Äquilibrierung von im Wesentlichen linearen, endständige SiC-gebundene Aminogruppen aufweisenden Organopolysiloxanen mit im Wesentlichen linearen, endständige Si-gebundene Hydroxylgruppen aufweisenden Organopolysiloxanen und/oder Cyclosiloxanen in Anwesenheit von Äquilibrierungskatalysatoren,
mit
(B) Silazanen der Formel (IV) 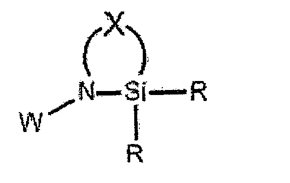 umgesetzt werden, wobei
W Wasserstoffatom, einwertigen gegebenenfalls substituierten Kohlenwasserstoffrest oder Organosilylrest bedeutet,
R gleich oder verschieden sein kann und einwertigen, gegebenenfalls substituierten Kohlenwasserstoffrest oder Organyloxyrest bedeutet und
X einen zweiwertigen, gegebenenfalls substituierten Kohlenwasserstoffrest bedeutet, der durch Sauerstoff- oder Stickstoffatome unterbrochen sein kann.

2. Verfahren gemäß Anspruch 1, **dadurch gekennzeichnet, dass** es sich bei Rest W um Organosilylreste der Formel
-SiR⁴₂-Z-NR⁵₂ (V)
handelt, wobei
R⁴ gleich oder verschieden sein kann und eine für R angegebene Bedeutung hat,
R⁵ gleich oder verschieden sein kann und Wasserstoffatom oder einwertigen, gegebenenfalls substituierten Kohlenwasserstoffrest bedeutet und
Z einen zweiwertigen, gegebenenfalls substituierten Kohlenwasserstoffrest bedeutet, der durch Sauerstoff- oder Stickstoffatome unterbrochen sein kann.

3. Verfahren gemäß Anspruch 1 oder 2, **dadurch gekennzeichnet, dass**
in einer 1. Stufe
(a1) im Wesentlichen lineare, endständige SiC-gebundene Aminogruppen aufweisende Organopolysiloxane
mit
(a2) im Wesentlichen linearen, endständige Si-gebundene Hydroxylgruppen aufweisenden Organopolysiloxanen
und/oder Cyclosiloxanen
in Anwesenheit von Äquilibrierungskatalysatoren umgesetzt werden und
in einer 2. Stufe
die so erhaltenen Aminogruppen und Si-gebundene Hydroxylgruppen aufweisenden Organopolysiloxane (A) mit
(B) Silazanen der Formel (IV) 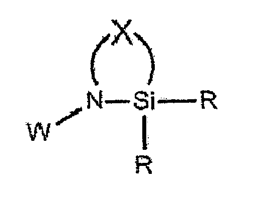 umgesetzt werden, wobei
W Wasserstoffatom, einwertigen gegebenenfalls substituierten Kohlenwasserstoffrest oder Organosilylrest bedeutet,
R gleich oder verschieden sein kann und einwertigen, gegebenenfalls substituierten Kohlenwasserstoffrest oder Organyloxyrest bedeutet und
X einen zweiwertigen, gegebenenfalls substituierten Kohlenwasserstoffrest bedeutet, der durch Sauerstoff- oder Stickstoffatome unterbrochen sein kann.

4. Verfahren nach Anspruch 3, **dadurch gekennzeichnet, dass** in der 1. Stufe zusätzlich zu den Siloxanen (a1) und (a2) Silazane (a3) eingesetzt werden.

5. Verfahren nach Anspruch 3 oder 4, **dadurch gekennzeichnet, dass** Silazan (a3) in Mengen von 0,1 bis 20 Gew.-Teilen, insbesondere 0,1 bis 5 Gew.-Teilen, jeweils bezogen auf 100 Gewichtsteile des Gesamtgewichts an Siloxane (a1) und (a2), eingesetzt wird.

6. Verfahren nach einem oder mehreren der Ansprüche 1 bis 5, **dadurch gekennzeichnet, dass** es sich bei den im Wesentlichen linearen, endständige Aminogruppen aufweisenden Organopolysiloxanen (a1) um Siloxane der Formel
R⁶HN-Y- [SiR¹₂O]ₙSiR¹₂-Y-NHR⁶ (I)
handelt, wobei
R¹ gleich oder verschieden sein kann und einen einwertigen, gegebenenfalls substituierten Kohlenwasserstoffrest bedeutet,
R⁶ gleich oder verschieden sein kann und Wasserstoffatom oder einwertigen, gegebenenfalls substituierten Kohlenwasserstoffrest bedeutet,
Y gleich oder verschieden sein kann und einen zweiwertigen, gegebenenfalls substituierten Kohlenwasserstoffrest bedeutet und
n eine ganze Zahl von größer oder gleich 1 ist.

7. Verfahren nach einem oder mehreren der Ansprüche 1 bis 6, **dadurch gekennzeichnet, dass** als Komponente (a2) Cyclosiloxane eingesetzt werden.

8. Verfahren nach einem oder mehreren der Ansprüche 1 bis 7, **dadurch gekennzeichnet, dass** die Äquilibrierungsstufe bei einer Temperatur von 60 bis 150°C durchgeführt wird.

9. Verfahren nach einem oder mehreren der Ansprüche 1 bis 8, **dadurch gekennzeichnet, dass** Silazan (B) in Mengen von 0,1 bis 10 Gew.-Teilen, jeweils bezogen auf 100 Gewichtsteile Aminogruppen und Si-gebundene Hydroxylgruppen aufweisendes Organopolysiloxan (A), eingesetzt wird.

10. Verfahren nach einem oder mehreren der Ansprüche 1 bis 9, **dadurch gekennzeichnet, dass** die Umsetzung mit Silazan (B) bei einer Temperatur von 25 bis 90°C durchgeführt wird.

## Claims

1. Process for preparing organopolysiloxanes containing amino groups, **characterized in that**
(A) organosilicon compounds containing amino groups and Si-bonded hydroxyl groups, obtainable by equilibration of substantially linear organopolysiloxanes containing terminal, SiC-bonded amino groups with substantially linear organopolysiloxanes containing terminal, Si-bonded hydroxyl groups, and/or cyclosiloxanes, in the presence of equilibration catalysts,
are reacted with
(B) silazanes of the formula 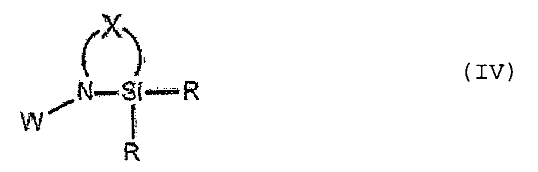 where
W denotes hydrogen atom, monovalent, optionally substituted hydrocarbon radical or organosilyl radical,
R may be identical or different and denotes monovalent, optionally substituted hydrocarbon radical or organyloxy radical, and
X denotes a divalent, optionally substituted hydrocarbon radical which may be interrupted by oxygen or nitrogen atoms.

2. Process according to Claim 1, **characterized in that** radical W comprises organosilyl radicals of the formula
-SiR⁴₂-Z-NR⁵₂ (V)
where
R⁴ may be identical or different and has a definition indicated for R,
R⁵ may be identical or different and denotes hydrogen atom or monovalent, optionally substituted hydrocarbon radical, and
Z denotes a divalent, optionally substituted hydrocarbon radical which may be interrupted by oxygen or nitrogen atoms.

3. Process according to Claim 1 or 2, **characterized in that**
in a 1^{st} stage
(a1) substantially linear organopolysiloxanes containing terminal, SiC-bonded amino groups
are reacted with
(a2) substantially linear organopolysiloxanes containing terminal, Si-bonded hydroxyl groups
and/or cyclosiloxanes
in the presence of equilibration catalysts, and
in a 2^{nd} stage
the resulting organopolysiloxanes (A) containing amino groups and Si-bonded hydroxyl groups
are reacted with
(B) silazanes of the formula 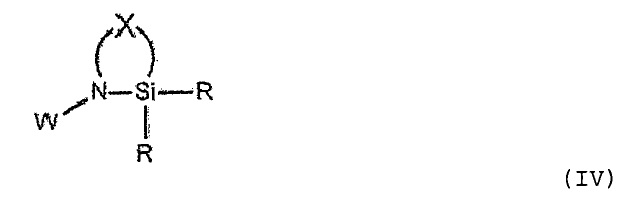 where
W denotes hydrogen atom, monovalent, optionally substituted hydrocarbon radical or organosilyl radical,
R may be identical or different and denotes monovalent, optionally substituted hydrocarbon radical or organyloxy radical, and
X denotes a divalent, optionally substituted hydrocarbon radical which may be interrupted by oxygen or nitrogen atoms.

4. Process according to Claim 3, **characterized in that** silazanes (a3) are used in the 1^{st} stage in addition to the siloxanes (a1) and (a2).

5. Process according to Claim 3 or 4, **characterized in that** silazane (a3) is used in amounts of 0.1 to 20 parts by weight, more particularly 0.1 to 5 parts by weight, based in each case on 100 parts by weight of the total weight of siloxanes (a1) and (a2).

6. Process according to one or more of Claims 1 to 5, **characterized in that** the substantially linear organopolysiloxanes (a1) containing terminal amino groups are siloxanes of the formula
R⁶HN-Y- [SiR¹₂O]ₙSiR¹₂-Y-NHR⁶ (I)
where
R¹ may be identical or different and denotes a monovalent, optionally substituted hydrocarbon radical,
R⁶ may be identical or different and denotes hydrogen atom or monovalent, optionally substituted hydrocarbon radical,
Y may be identical or different and denotes a divalent, optionally substituted hydrocarbon radical, and
n is an integer greater than or equal to 1.

7. Process according to one or more of Claims 1 to 6, **characterized in that** cyclosiloxanes are used as component (a2).

8. Process according to one or more of Claims 1 to 7, **characterized in that** the equilibration stage is carried out at a temperature of 60 to 150°C.

9. Process according to one or more of Claims 1 to 8, **characterized in that** silazane (B) is used in amounts of 0.1 to 10 parts by weight, based in each case on 100 parts by weight of organopolysiloxane (A) containing amino groups and Si-bonded hydroxyl groups.

10. Process according to one or more of Claims 1 to 9, **characterized in that** the reaction with silazane (B) is carried out at a temperature of 25 to 90°C.

## Revendications

1. Procédé de fabrication d'organopolysiloxanes comprenant des groupes amino, **caractérisé en ce que** (A) des composés d'organosilicium comprenant des groupes amino et des groupes hydroxyle reliés à Si, pouvant être obtenus par équilibrage d'organopolysiloxanes essentiellement linéaires, comprenant des groupes amino terminaux reliés à SiC, avec des organopolysiloxanes essentiellement linéaires, comprenant des groupes hydroxyle terminaux reliés à Si et/ou des cyclosiloxanes, en présence de catalyseurs d'équilibrage,
sont mis en réaction avec
(B) des silazanes de formule (IV) 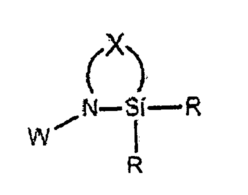 dans laquelle
W signifie un atome d'hydrogène, un radical hydrocarboné monovalent, éventuellement substitué, ou un radical organosilyle,
les R peuvent être identiques ou différents et signifient un radical hydrocarboné monovalent, éventuellement substitué, ou un radical organyloxy, et
X signifie un radical hydrocarboné bivalent, éventuellement substitué, qui peut être interrompu par des atomes d'oxygène ou d'azote.

2. Procédé selon la revendication 1, **caractérisé en ce que** le radical W correspond à des radicaux organosilyle de formule
-SiR⁴₂-Z-NR⁵₂ (V)
dans laquelle
les R⁴ peuvent être identiques ou différents et ont une des significations données pour R,
les R⁵ peuvent être identiques ou différents et signifient un atome d'hydrogène ou un radical hydrocarboné monovalent, éventuellement substitué, et
Z signifie un radical hydrocarboné bivalent, éventuellement substitué, qui peut être interrompu par des atomes d'oxygène ou d'azote.

3. Procédé selon la revendication 1 ou 2, **caractérisé en ce que**
lors d'une 1^{e} étape
(a1) des organopolysiloxanes essentiellement linéaires, comprenant des groupes amino terminaux reliés à SiC, sont mis en réaction avec
(a2) des organopolysiloxanes essentiellement linéaires, comprenant des groupes hydroxyle terminaux reliés à Si, et/ou des cyclosiloxanes
en présence de catalyseurs d'équilibrage, et
lors d'une 2^{e} étape,
les organopolysiloxanes (A) comprenant des groupes amino et des groupes hydroxyle reliés à Si ainsi obtenus sont mis en réaction avec
(B) des silazanes de formule (IV) 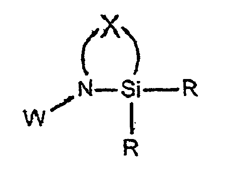 dans laquelle
W signifie un atome d'hydrogène, un radical hydrocarboné monovalent, éventuellement substitué, ou un radical organosilyle,
les R peuvent être identiques ou différents et signifient un radical hydrocarboné monovalent, éventuellement substitué, ou un radical organyloxy, et
X signifie un radical hydrocarboné bivalent, éventuellement substitué, qui peut être interrompu par des atomes d'oxygène ou d'azote.

4. Procédé selon la revendication 3, **caractérisé en ce que** des silazanes (a3) sont utilisés lors de la 1^{e} étape en plus de siloxanes (a1) et (a2).

5. Procédé selon la revendication 3 ou 4, **caractérisé en ce que** le silazane (a3) est utilisé en quantités de 0,1 à 20 parties en poids, notamment de 0,1 à 5 parties en poids, à chaque fois par rapport à 100 parties en poids du poids total de siloxanes (a1) et (a2).

6. Procédé selon une ou plusieurs des revendications 1 à 5, **caractérisé en ce que** les organopolysiloxanes (a1) essentiellement linéaires, comprenant des groupes amino terminaux sont des siloxanes de formule
R⁶HN-Y- [SiR¹₂O]ₙSiR¹₂-Y-NHR⁶ (I)
dans laquelle
les R¹ peuvent être identiques ou différents et signifient un radical hydrocarboné monovalent, éventuellement substitué,
les R⁶ peuvent être identiques ou différents et signifient un atome d'hydrogène ou un radical hydrocarboné monovalent, éventuellement substitué,
les Y peuvent être identiques ou différents et signifient un radical hydrocarboné bivalent, éventuellement substitué, et
n est un nombre entier supérieur ou égal à 1.

7. Procédé selon une ou plusieurs des revendications 1 à 6, **caractérisé en ce que** des cyclosiloxanes sont utilisés en tant que composant (a2).

8. Procédé selon une ou plusieurs des revendications 1 à 7, **caractérisé en ce que** l'étape d'équilibrage est réalisée à une température de 60 à 150 °C.

9. Procédé selon une ou plusieurs des revendications 1 à 8, **caractérisé en ce que** le silazane (B) est utilisé en quantités de 0,1 à 10 parties en poids, à chaque fois par rapport à 100 parties en poids d'organopolysiloxane (A) comprenant des groupes amino et des groupes hydroxyle reliés à Si.

10. Procédé selon une ou plusieurs des revendications 1 à 9, **caractérisé en ce que** la réaction avec le silazane (B) est réalisée à une température de 25 à 90 °C.
